# EUROPÄISCHE PATENTSCHRIFT

(11) **EP 4 644 891 B1**
(45) Veröffentlichungstag und Bekanntmachung des Hinweises auf die Patenterteilung: **12.08.2026**
(21) Anmeldenummer: 25154034.0
(22) Anmeldetag: 27.01.2025
(51) Int. Cl.: G01N 29/14

(54) **VERFAHREN UND SYSTEM ZUR ÜBERWACHUNG DES ZUSTANDS VON IN BETRIEB BEFINDLICHEN MECHANISCH BELASTETEN OBJEKTEN**
METHOD AND SYSTEM FOR MONITORING THE STATE OF MECHANICALLY LOADED OBJECTS IN OPERATION
PROCÉDÉ ET SYSTÈME DE SURVEILLANCE DE L'ÉTAT D'OBJETS SOUMIS À DES CONTRAINTES MÉCANIQUES EN FONCTIONNEMENT

(30) Priorität: 30.04.2024 EP 24173558
(43) Veröffentlichungstag der Anmeldung: 05.11.2025
(73) Patentinhaber: Tüv Österreich (Technischer Überwachungs-Verein Österreich), 1230 Wien (AT)
(72) Erfinder: Schwald, Christoph, 1180 Wien (AT); Lackner, Gerald, 2344 Brunn am Gebirge (AT); Eder, Sebastian, 1230 Wien (AT)
(74) Vertreter: Schwarz & Partner Patentanwälte GmbH

(56) Entgegenhaltungen:
- EP-B1- 3 757 386
- WO-A2-2015/065873
- CN-B- 102 721 741
- US-A1- 2019 178 852

## Beschreibung

Die Erfindung betrifft ein Verfahren und ein System zur Überwachung des Zustands von in Betrieb befindlichen mechanisch belasteten Objekten. Solche Objekte sind beispielsweise Strukturen von Industrieanlagen und Maschinenelementen und Tragwerke.

Eine herkömmliche Schallemissionsprüfung wird an Druckgeräten im industriellen Anlagenbereich angewandt und dient zur Bewertung der strukturellen Integrität des Prüfobjekts. Dabei wird mittels einer Druckerhöhungseinheit über einen Anschluss zu einem Druckgerät kontinuierlich eine Drucksteigerung auf das Prüfobjekt aufgebracht und gleichzeitig die Schallemissionen an den Sensoren als Antwort des Materials der drucktragenden Wandung des Prüfobjekts auf diese zusätzliche Belastung gemessen. Der dabei aufgebrachte erhöhte Druck ist in seiner Größenordnung dem Prüfinspektor bekannt. Durch die Korrelation des Drucks mit den Messsignalen kann über Bewertungs- und Ortungsverfahren eine etwaige Degradation des Prüfobjekts ermittelt werden und klassifiziert werden. Im Fall einer negativen Bewertung muss das Prüfobjekt unmittelbar außer Betrieb gesetzt werden, was im Fall einer Industrieanlage zu massiven wirtschaftlichen Ausfällen bzw. zu einem Ausfall der Energieversorgung führen kann. Um es nicht so weit kommen zu lassen, dass das Prüfobjekt außer Betrieb gesetzt werden muss, kann die Druckprüfung in zeitlichen Abständen durchgeführt werden, um eine Degradation des Prüfobjekts festzustellen und Maßnahmen dagegen zu ergreifen, solange die Degradation nicht so weit fortgeschritten ist, dass das Prüfobjekt außer Betrieb gesetzt werden muss. Durch die wiederholte Schallemissionsprüfung in regelmäßigen oder unregelmäßigen Zeitabständen wird der Zustand des Prüfobjekts, insbesondere seine strukturelle Integrität überwacht.

Die europäische Norm EN 17391:2022 beschreibt die Überwachung der Schallemission von metallischen Druckgeräten und -strukturen im Betrieb.

Es sind Schallemissionsmessgeräte und -systeme für Schallemissions-Anwendungen am Markt erhältlich, wie z.B. die Geräte der Firma Vallen Systeme GmbH (https://www.vallen.de). Diese Geräte sind zwar leistungsstark, für eine Langzeitüberwachung von Prüfobjekten aber aufgrund ihrer Kosten, ihrer Größe, ihrer hohen Stromaufnahme und der eingeschränkten Widerstandsfähigkeit gegenüber harschen Umweltbedingungen in der Praxis nur bedingt geeignet.

Aus dem Dokument EP 3 757 386 B1 sind Windradflügelüberwachungsverfahren und -systeme bekannt, die Schäden an einer oder mehreren Komponenten des Windrads, wie z. B. Schäden an den Flügeln, erkennen sollen. Das Verfahren beruht auf dem Erkennen von akustischen Signalen über einen akustischen Sensor, der in einem Hohlraum eines Flügels eines Windrads angeordnet ist; dem Empfangen von Informationen, die den akustischen Signalen zugeordnet sind, durch einen Prozessor; und dem Bestimmen, durch den Prozessor, ob der Flügel beschädigt ist, basierend auf den Informationen, die den akustischen Signalen zugeordnet sind. Das Bestimmen, ob der Flügel beschädigt ist, basierend auf den Informationen, die den akustischen Signalen zugeordnet sind, umfasst das Berechnen einer akkumulierten korrigierten Absolutenergie basierend auf den Informationen, die den akustischen Signalen zugeordnet sind, wobei das Berechnen der akkumulierten korrigierten Absolutenergie das Akkumulieren einer korrigierten Absolutenergie über Zeit beinhaltet, wobei die korrigierte Absolutenergie durch Subtrahieren eines Wertes, der nicht-erosive Betriebsbedingungen repräsentiert, von einem Wert basierend auf den akustischen Signalen, die eine Absolutenergie darstellen, bestimmt wird. Die Messung, wie sehr der Windradflügel der Erosion ausgesetzt ist, basiert auf der berechneten akkumulierten korrigierten absoluten Energie, wobei die Erosionsaussetzung einer kumulativen erosiven Wirkung von korrosiven Kräften auf den Flügel über der Zeit entspricht. Es handelt sich bei dieser Windradflügelüberwachung um eine sehr spezifische Anwendung, die die Festlegung nicht-erosiver Betriebsbedingungen voraussetzt, was mit hohen Unsicherheiten behaftet ist angesichts der Vielzahl unterschiedlicher erosiver Umweltbedingungen, die in diesem Dokument genannt sind, wie z.B. Wind, Staub, Hagel, Regen. Die gemessenen Signale sind jeweils mit einer (wenngleich kleinen) Degradation des Windrads verbunden. Jeder äußere Stimulus, etwa durch Regen oder Hagel, wird als schädigender Einfluss betrachtet, sodass ein akkumuliertes Signal als kumulativer Erosionseffekt interpretiert wird. Dies ist in Absatz 0021 von EP 3 757 386 B1 erläutert. Diese akkumulierten Daten (d.h. der momentane Degradationszustand) werden anschließend numerisch mit einem Schwellenwert verglichen. Übersteigen die Daten diesen Schwellenwert, wird eine Degradation festgestellt. Als Alternative zu dieser Auswertung ist in Absatz 0022 von EP 3 757 386 B1 eine weitere Schwellenwertvergleich-Methode beschrieben, bei der die Differenz von akkumulierten Daten zweier Windradflügel berechnet und diese Differenz mit einem Schwellenwert verglichen wird. Falls sich Hagel/Regen/etc. lediglich auf einen Flügel ausgewirkt haben sollten, kann so der akkumulierte Degradationszustand mit einem weiteren Degradationszustand eines intakten Flügels (als Schwellenwert) verglichen werden.

Das in EP 3 757 386 B1 beschriebene Windradflügelüberwachungsverfahren setzt eine kumulative erosive Wirkung von korrosiven Kräften auf den Flügel über die Zeit voraus. Das Verfahren ist jedoch im Fall von auf ein Objekt einwirkenden Schallereignissen, die nicht zu einer Degradation des Objekts führen, für eine verlässliche Feststellung der Degradation nicht zu gebrauchen. Mit diesem Verfahren ist auch nicht feststellbar, ob an dem Objekt bereits früher eine Degradation aufgetreten ist.

Es besteht daher nach wie vor ein Bedürfnis nach einem Verfahren und einem System zur Überwachung des Zustands von in Betrieb befindlichen mechanisch belasteten Objekten, die eine verlässliche Aussage über die Degradation des Prüfobjekts ermöglichen, Flexibilität zur Überwachung unterschiedlicher Objekte bieten, mit vernünftigen Kosten leicht installierbar sind, und ein kompaktes und robustes Design aufweisen.

Die vorliegende Erfindung löst die gestellte Aufgabe durch Bereitstellen eines Verfahrens und eines Systems zur Überwachung des Zustands von in Betrieb befindlichen mechanisch belasteten Objekten, wie nachfolgend angegeben.

Das erfindungsgemäße Verfahren zur Überwachung des Zustands von in Betrieb befindlichen mechanisch belasteten Objekten umfasst das:
Erkennen von Körperschallwellen über akustische Sensoren, vorzugsweise piezoelektrische akustische Sensoren, die an dem Objekt angeordnet sind,
Umsetzen der Körperschallwellen in elektrische Schallemissionssignale, wobei die elektrischen Schallemissionssignale optional verstärkt werden,
Übermitteln der elektrischen Schallemissionssignale an ein am oder in der Nähe des Objekts angeordnetes Hauptmodul, das einen Prozessor aufweist,
Umwandeln der elektrischen Schallemissionssignale in charakteristische Signalparameterwerte, die vorzugsweise eines oder mehrere aus Signalankunftszeit, Amplitude, Anstiegszeit, Signalenergie, Signaldauer und/oder Zahl der Überschwingungen umfassen, durch den Prozessor,
Übermitteln der Signalparameterwerte an einen entfernten Rechner und Speichern der Signalparameterwerte in einem mit dem entfernten Rechner kommunizierenden Speicher, Erkennen von Schallereignissen aus den charakteristischen Signalparameterwerten, vorzugsweise aus in den charakteristischen Signalparameterwerten enthaltenen
Signalankunftszeiten, von mehreren der akustischen Sensoren, die am Objekt an unterschiedlichen Positionen angeordnet sind.
Aggregieren der charakteristischen Signalparameterwerte der Schallereignisse durch den entfernten Rechner über die Zeit,
Berechnen durch den entfernten Rechner, ob zumindest einer der aggregierten charakteristischen Signalparameterwerte über die Zeit von vorangegangenen aggregierten charakteristischen Signalparameterwerten abweicht und wenn dies der Fall ist, Festlegen, dass das Objekt eine Degradation aufweist und optional Generieren einer Meldung, vorzugsweise einer Warninformation an einen Benutzer des Objekts.

Dieses Verfahren wird gemäß der Erfindung durch ein System realisiert, umfassend:
an einem zu überwachenden Objekt anordenbare akustische Sensoren, vorzugsweise piezoelektrische akustische Sensoren, zur Erkennung von Körperschallwellen, wobei die akustischen Sensoren dazu ausgebildet sind, empfangene Körperschallwellen in elektrische Schallemissionssignale umzusetzen,
optional Vorverstärker zur Verstärkung der elektrischen Schallemissionssignale, wobei die Vorverstärker in die akustischen Sensoren integriert sein können,
ein am oder in der Nähe des Objekts anordenbares Hauptmodul, das einen Prozessor aufweist, wobei das Hauptmodul dazu ausgebildet ist, die elektrischen Schallemissionssignale von den akustischen Sensoren oder optional von den Vorverstärkern zu empfangen,
wobei das Hauptmodul dazu ausgebildet ist, durch den Prozessor die empfangenen elektrischen Schallemissionssignale in charakteristische Signalparameterwerte, die vorzugsweise eines oder mehrere aus Signalankunftszeit, Amplitude, Anstiegszeit, Signalenergie, Signaldauer und/oder Zahl der Überschwingungen umfassen, umzuwandeln und an einen entfernten Rechner zu senden,
einen entfernten Rechner mit einem Speicher, der dazu ausgebildet ist, Abfolgen von charakteristischen Signalparameterwerten vom Hauptmodul zu empfangen und im Speicher zu speichern,
wobei der entfernte Rechner dazu ausgebildet ist, die charakteristischen Signalparameterwerte über die Zeit zu aggregieren und zu berechnen, ob zumindest einer der aggregierten charakteristischen Signalparameterwerte über die Zeit von vorangegangenen aggregierten charakteristischen Signalparameterwerten abweicht und wenn dies der Fall ist, festzulegen, dass das Objekt eine Degradation aufweist, und optional eine Meldung zu generieren, vorzugsweise in Form einer Warninformation an einen Benutzer des Objekts.

Bei der vorliegenden Erfindung wird kein zusätzlicher bewusster Stimulus, wie z.B. Druck, auf das Prüfobjekt aufgebracht, sondern es werden die Schallemissionen gemessen, die durch den normalen Betrieb des Prüfobjekts auftreten. Das kann z.B. bei einem Chemiereaktor der über die Prozessanlage aufgebrachte Druck oder die Temperatur sein, bei einer Brücke der überfahrende Zug oder Lastkraftwagen etc. Durch Aufzeichnen der Messsignale und Aggregieren der charakteristischen Signalparameterwerte der Schallereignisse durch den entfernten Rechner über die Zeit kann über das datenanalytische Verfahren sogar ohne Kenntnisse der auf das Prüfobjekt durch den Betrieb einwirkenden physikalischen Stimuli der Zustand, insbesondere die Degradation, des Objekts ermittelt werden und gegebenenfalls eine Vorhersage der weiteren Degradation und somit der Restlebensdauer des Objekts ermittelt werden.

Es besteht somit ein grundlegender Unterschied zwischen der vorliegenden Erfindung und dem in EP 3 757 386 B1 vorgeschlagenen Verfahren, der darin liegt, was gemessen wird. Gemäß der vorliegenden Erfindung werden Schallereignisse erkannt, also Signale, die auf im gewöhnlichen Betrieb auftretende Stimuli zurückführbar sind (z.B. ein Auto, das über eine Brücke fährt), unabhängig davon, ob bereits eine Degradation des Objekts (z.B. der Brücke) eingetreten ist. Gemäß der Erfindung werden dazugehörige Signalparameterwerte gemessen und akkumuliert. Sobald sich eine Degradation im zu überwachenden Objekt bildet, ändern sich die Signalparameterwerte, sodass sich später akkumulierte Signalparameterwerte von früher akkumulierten Signalparameterwerten unterscheiden. Ein bloßes Vergleichen von akkumulierten Daten mit einem Schwellenwert, wie in EP 3 757 386 B1 vorgeschlagen, würde bei der vorliegenden Erfindung keinen Sinn machen, da nicht jedes Signal mit einer Degradation des Objekts verbunden ist. Anders ausgedrückt: auch wenn das überwachte Objekt zu 100% unbeschädigt ist, würden die akkumulierten Daten bei dem Verfahren gemäß EP 3 757 386 B1 irgendwann einen Schwellenwert überschreiten, ohne dass eine Aussage über den Degradationszustand getroffen werden könnte.

Das Dokument US 20190178852 A1 zeigt ein Verfahren samt zugehörigem System zur Überwachung von Beschädigungen von Windradanlagen, insbesondere hinsichtlich der Rotorblattlager. Es sind Sensoren am Windrad montiert, die Ultraschallwellen messen, die sich ausgehend von einem Aktuator durch das Material des Windrads ausbreiten. Risse oder ähnliche Degradationen wirken sich dabei auf die Propagation der Ultraschallwellen aus. Signale der Sensoren werden an ein Überwachungssystem geleitet. Zwei zu unterschiedlichen Zeitpunkten erfolgte Messungen werden in jeweils einem ersten/zweiten Datenpaket gespeichert und an einen entfernten Rechner gesendet, wo die ersten und zweiten Datenpakete miteinander verglichen werden, um eine Abweichung festzustellen. Eine Aggregierung von Signalparameterwerten findet nicht statt.

Das Dokument CN 102721741 B offenbart ein weiteres Verfahren samt zugehörigem System zur Überwachung von Beschädigungen von Windradanlagen, insbesondere hinsichtlich der Turbinenflügel. Mehrere drahtlose Sensoren werden hierfür auf den Flügeln montiert und kommunizieren mit einem Cluster-Knotenpunkt. Tritt ein Riss oder dergleichen auf oder vergrößert er sich, erzeugt dies ein akustisches Signal, das von den Sensoren erfasst wird. Überschreitet das Signal einen vorgegebenen Schwellenwert, wird es als gefährlich eingestuft und an einen externen Rechner übersandt. Durch geeignete Triangulationsmethoden kann die Position des Risses am Flügel festgestellt werden.

Die WO 2015065873 A2 zeigt ebenfalls ein Verfahren, um Schäden an einem Windrad zu überwachen. Dafür werden Schallsensoren auf den Flügeln 410 eines Windrads montiert und detektieren Schallwellen, die entweder von äußeren Einflüssen, wie z.B. Wind, oder von Schallquellen erzeugt werden. Kommt es zu einer Beschädigung, hat dies einen Einfluss auf die Propagation der Schallwellen, woraus eine Beschädigung detektiert werden kann. Es werden keine Daten akkumuliert, weshalb auch keine Abweichung akkumulierter Daten von früheren akkumulierten Daten festgestellt werden kann.

Vorteilhafte Ausführungsformen der Erfindung sind in den abhängigen Ansprüchen, der Beschreibung und den Zeichnungen definiert.

In einer Ausführungsform der Erfindung stellt der entfernte Rechner eine Degradation fest, wenn die Abweichung der aggregierten charakteristischen Signalparameterwerte von vorangegangenen aggregierten charakteristischen Signalparameterwerten einen vorbestimmten Schwellenwert überschreitet. Damit kann automatisiert eine Degradation des Objekts bestimmt werden, ohne dass es notwendig ist, auf das Objekt ausgeübte Stimuli zu kennen. Die Degradation kann über einen langen Zeitraum bestimmt werden und so das Fortschreiten einer Degradation des Objekts festgestellt werden.

Herkömmlicherweise wird Degradation abgeleitet aus der Zunahme von Risslängen, Wanddickenminderungen und dergleichen. Diese Größen sind mit herkömmlichen Verfahren nur ungenau zu bestimmen und eignen sich nicht für kontinuierliche Messungen (Dauerüberwachungen). Hingegen ist dieses vorgeschlagene erfindungsgemäße Verfahren höchst geeignet für kontinuierliche Messungen und Erfassung von kleinsten Degradationsereignissen im mikroskopischen Maßstab nicht nur an der Oberfläche, sondern auch im Volumen des überwachten Materialbereichs.

Bevorzugt wird der Schwellenwert bestimmt durch:
initiales Ermitteln von im Betrieb und in Reaktion auf die einwirkenden Stimuli auftretenden Schallereignissen in einer Abfolge von Signalparameterwerten,
Unterteilen der Abfolge von Signalparameterwerten in konstante Zeitabschnitte oder in Zeitabschnitte mit der Zeitdauer der auf das Prüfobjekt einwirkenden Stimuli aufgrund der Betriebsbelastung,
Ermitteln von Varianzen oder Gradienten in der Abfolge von Schallereignissen mit charakteristischen Signalparameterwerten zueinander durch Überlagern der Zeitabschnitte, und
Festlegen des Schwellenwerts auf Basis eines Vergleichs der ermittelten Varianzen oder Gradienten.

Herkömmliche Messverfahren verfügen nicht über die notwendige Empfindlichkeit, um auch kleinste Änderungen (Gradienten) im Material feststellen zu können. Deshalb braucht es sehr lange Zeiträume, um mit herkömmlichen Messverfahren Änderungen am Objekt feststellen zu können. Gerade zu Beginn einer Degradation ist die zeitliche Zunahme der Degradation sehr gering und nimmt erst relativ nahe am Versagen des Objekts stark zu. Daher ist mit herkömmlichen Verfahren erst knapp vor dem eigentlichen Versagen eine klare Aussage über den Zustand des Objekts ableitbar. Demgegenüber sind mit der obigen Ausführungsform des erfindungsgemäßen Verfahrens selbst kleinste Fortschritte in der Degradation feststellbar.

In Laborversuchen über lange Zeiträume wurden an den in Betracht gezogenen Degradationsformen Schwellenwerte ermittelt. Aus dem zeitlichen Verlauf der Degradation konnte abgeleitet werden, ab welcher Zunahme (Gradient) ein mögliches Versagen bevorsteht. Mit diesen Erkenntnissen haben die Erfinder mathematische Modelle für den Verlauf der Degradation erstellt, mit denen die Automatisierung der Degradationsüberwachung möglich ist. Eine geeignete Ausführungsform eines mathematischen Modells basiert auf einem empirischen Konzept, bei dem die Gesamtdegradation zum Zeitpunkt *t* durch die zeitabhängige Degradationsfunktion*Ω (t)* gegeben ist. Die Degradationsgeschwindigkeit ist durch die erste zeitliche Ableitung *Ω̇ (t)* der Abbaugeschwindigkeit gegeben. Eine zunehmende Degradationsgeschwindigkeit hin zum Zeitpunkt des Versagens kennzeichnet einen selbstbeschleunigenden Degradationsprozess. In diesem Fall nimmt die Abbaugeschwindigkeit mit zunehmender Gesamtdegradation zu. Dieses Verhalten wird als positiver Rückkopplungsmechanismus bezeichnet und lässt sich durch die zweite zeitliche Ableitung der zeitabhängigen Degradationsfunktion *Ω (t) berechnen.* Im Falle einer positiven Rückkopplung ist die Degradationsfunktion*Ω* (*t*) eine Lösung der empirischen Beziehung $\frac{{d}^{2} Ω}{{dt}^{2}} = A {\left(\frac{dΩ}{dt}\right)}^{α}$, wobei $\frac{dΩ}{dt}$ und $\frac{{d}^{2} Ω}{{dt}^{2}}$ die erste bzw. zweite Zeitableitung und *A* sowie *α* Prozesskonstanten sind. Die Prozesskonstanten A sowie *α* lassen sich durch Laborversuche oder in der Initialisierungsphase ermitteln.

Wenn das Berechnen durch den entfernten Rechner, ob zumindest einer der aggregierten charakteristischen Signalparameterwerte über die Zeit von früheren aggregierten charakteristischen Signalparameterwerten abweicht, durch Bestimmen der zeitlichen Varianzabweichung oder Gradientenabweichung im Vergleich zu den initial ermittelten Varianzen oder Gradienten erfolgt, kann auf den zukünftigen Zustand des Objekts geschlossen werden. Dadurch ist eine zeitliche Planung möglich, ob bzw. wann eine Wartung oder Reparatur des Objekts vorgenommen werden muss.

Um die Sicherheit des erfindungsgemäßen Verfahrens zu erhöhen, wurden neben den Schwellenwerten auch die Veränderung der aggregierten charakteristischen Signalparameterwerte (Gradienten) über die Zeit in Laborversuchen über lange Zeiträume ermittelt und in mathematische Modelle überführt. Durch den Vergleich des tatsächlich gemessenen Verlaufs mit dem im Labor ermittelten Kennlinien (mathematisches Modell) gelingt die Zuordnung des aktuellen Zustands zur Schwere der Degradationserscheinung. Die Anpassung des mathematischen Modells an die gegebene Überwachungsaufgabe erfolgt in der initialen Phase zu Beginn des Monitorings.

Das erfindungsgemäße Verfahren und das erfindungsgemäße System eignen sich vorzüglich zur Langzeitüberwachung von zumindest mehreren Tagen, bevorzugt von zumindest einem Monat, oder sogar zur Dauerüberwachung von Objekten.

Ein besonderes Problem stellt die Überwachung des Zustands von Eisenbahnbrücken oder Straßenbrücken dar. Solche Brücken wurden beispielsweise vor Jahrzehnten als Stahlbrücken oder Stahlbetonbrücken errichtet und sind durch das ständige Überfahren mit Zügen oder Kraftfahrzeugen einer hohen dynamischen Beanspruchung ausgesetzt, die zu einer allmählichen Degradation des Zustands, insbesondere der Tragfähigkeit, der Brücken führt. Daher muss der Zustand dieser Brücken in regelmäßigen Perioden einer Sicherheitsüberprüfung unterzogen werden. Diese Sicherheitsüberprüfung erfolgt durch Begehung der Brücken durch entsprechend qualifiziertes Inspektionspersonal. Diese Arbeit ist außerdem risikobehaftet, weil die Brücken oftmals schwer zugänglich sind, Klettern auf Brückenteilen fallweise erforderlich ist und das Personal dabei allen Wetterbedingungen ausgesetzt ist. Zudem erfordert die Arbeit viel Erfahrung und ist höchst verantwortungsvoll. Aus den genannten Gründen wird es für die Betreiber von Verkehrsinfrastruktur immer schwieriger für die alternden Brücken mit hohem Inspektionsbedarf, das dafür erforderliche Inspektionspersonal zu rekrutieren und halten zu können. Die vorliegende Erfindung dient auch dazu, die aufwändige manuelle Tätigkeit durch automatische Überwachung zu ergänzen und zu unterstützen, wobei anstelle von Einzelbegehungen in zeitlichen Abständen auch eine Dauerüberwachung realisierbar ist. Mit der Erfindung kann die Charakterisierung der Degradation von Brücken und des Fortschreitens der Degradation gegenüber einer Begehung durch Personal verbessert werden. Die Erfindung sieht in einer Ausführungsform vor, dass der entfernte Rechner die Signalparameterwerte mit den Zeitpunkten und optional der Dauer des Überfahrens von individuellen Fahrzeugen über die Brücke verknüpft.

Es ist in einer Ausführungsform der Erfindung zusätzlich vorgesehen, dass der entfernte Rechner die Masse der die Brücke überfahrenden Fahrzeuge anhand der Signalparameterwerte durch Vergleich mit Referenz-Signalparameterwerten von Fahrzeugen mit bekannter Masse schätzt und für die Berechnung der Degradation des Objekts nur Signalparameterwerte heranzieht, die mit Fahrzeugen verknüpft sind, die eine vorbestimmte Mindestmasse aufweisen. Durch diese Maßnahmen können der Rechenaufwand und der Datenübertragungsaufwand auf die für die Degradation der Brücken am relevantesten Ereignisse begrenzt werden.

Die Masse des Fahrzeugs steht in direktem Zusammenhang mit den bei der Überfahrt gemessenen Signalparametern aufgrund der eingebrachten Anregung auf das Brückentragwerk. Es hat sich gezeigt, dass für die Degradation von Tragwerken nur hinreichend große Massen relevant sind, wogegen kleine Massen vernachlässigbar wenig zur Degradation beitragen. Bevorzugt erfolgt die Einstellung der Mindestmasse aufgrund der in der initialen Phase zu Beginn des Monitorings ermittelten Schwellenwerte.

Um die Langzeitüberwachung von schwer zugänglichen Objekten, wie z.B. Brücken, zu realisieren, ist in einer bevorzugten Ausführungsform des erfindungsgemäßen Systems vorgesehen, dass das Hauptmodul als unabhängiges Computermodul, vorzugsweise als Edge Computing Device, ausgebildet ist. Dieses Computermodul wird am Prüfobjekt befestigt und verbleibt auch während der Überwachung am Prüfobjekt. Unter "edge computing" versteht man eine Form der Datenverarbeitung, die direkt oder nahe am Prüfobjekt, an dem die Schallereignisse stattfinden, stattfindet, wodurch die Notwendigkeit der Verarbeitung von Daten in entfernten Rechnern minimiert wird. Das Computermodul führt somit eine Vorverarbeitung der Daten durch. Anforderungen, die das Computermodul erfüllt, sind eine geringe Größe und ein geringes Gewicht, um am Prüfobjekt befestigt werden zu können, sowie ein niedriger Stromverbrauch, um Wartungsintervalle für das Laden oder den Austausch von Energiespeichern minimieren zu können.

Die Erfindung sieht auch vor, dass das Hauptmodul Eingänge zum drahtgebundenen oder drahtlosen Verbinden mit den akustischen Sensoren und optional mit zusätzlichen Sensoren zur Erfassung von Temperatur, Druck, Kraft, Dehnung, Beschleunigung, Luftfeuchtigkeit, Regenmenge, Windstärke, Windrichtung, etc. aufweist. Die Messsignale dieser Sensoren werden in dem Hauptmodul aufbereitet und digital gewandelt.

Um aus der Ferne feststellen zu können, dass die akustischen Sensoren funktionsfähig sind, kann gemäß der Erfindung vorgesehen werden, das Hauptmodul dazu auszubilden, einen oder mehrere der akustischen Sensoren als Aktuator anzusprechen und damit einen Körperschallimpuls auf das Objekt zu übertragen, der von zumindest einem anderen verbundenen akustischen Sensor empfangen wird.

Da sich das Überwachungssystem an Orten befinden kann, an denen keine Stromversorgung verfügbar ist, ist in einer Ausführungsform der Erfindung vorgesehen, dass das Hauptmodul eine Stromversorgungseinheit, vorzugsweise ein Photovoltaikmodul und/oder eine Batterie, aufweist.

Für die Übertragung der Signalparameterwerte an den entfernten Rechner sieht die Erfindung vor, dass das Hauptmodul zumindest eine drahtlose oder drahtgebundene Datenübertragungseinheit aufweist. Bei dieser Datenübertragungseinheit kann es sich beispielsweise um ein Mobilfunkmodul, einen IoT-Hub, etc. handeln.

In einer Ausführungsform des erfindungsgemäßen Systems ist vorgesehen, dass der entfernte Rechner eine Schnittstelle zum Zugriff der gespeicherten oder von dem entfernten Rechner analysierten Signalparameterwerte durch ein Benutzer-Portal aufweist. Über dieses Benutzer-Portal können berechtigte Personen die Signalparameterwerte und daraus abgeleitete Werte, Tabellen, Diagramme und dergleichen einsehen und optional herunterladen.

Um die Konfiguration des Hauptmoduls zu ermöglichen, ohne dass sich eine Person direkt am Hauptmodul befinden muss, ist in einer bevorzugten Ausführungsform des erfindungsgemäßen Systems vorgesehen, dass das Hauptmodul zumindest eine drahtlose Datenübertragungsschnittstelle aufweist, mit der das Hauptmodul mit einem in der Nähe befindlichen Konfigurationsgerät verbunden werden und mittels dieses Konfigurationsgeräts konfiguriert und gesteuert werden kann.

Die Erfindung wird nachfolgend anhand von nicht einschränkenden Ausführungsbeispielen anhand der Zeichnungen näher erläutert.
Fig. 1 zeigt schematisch eine Ausführungsform des erfindungsgemäßen Systems zur Überwachung des Zustands von in Betrieb befindlichen mechanisch belasteten Objekten, wie z.B. Eisenbahnbrücken oder Straßenbrücken aus Stahl.
Fig. 2 zeigt ein Spannungs-Zeit-Diagramm eines elektrischen Schallemissionssignals und der daraus ableitbaren charakteristischen Signalparameterwerte.
Fig. 3A und Fig. 3B zeigen Diagramme der Anzahl von innerhalb eines bestimmten Zeitraums an einer ersten bzw. zweiten Position einer Brücke aufgetretenen Schallereignissen in Abhängigkeit von der Masse der über die Brücke gefahrenen Fahrzeuge.
Fig. 4A und Fig. 4B zeigen Diagramme der aggregierten Signalenergie von Schallemissionssignalen an einem unbeschädigten Objekt bzw. einem Objekt mit fortschreitender Degradation.

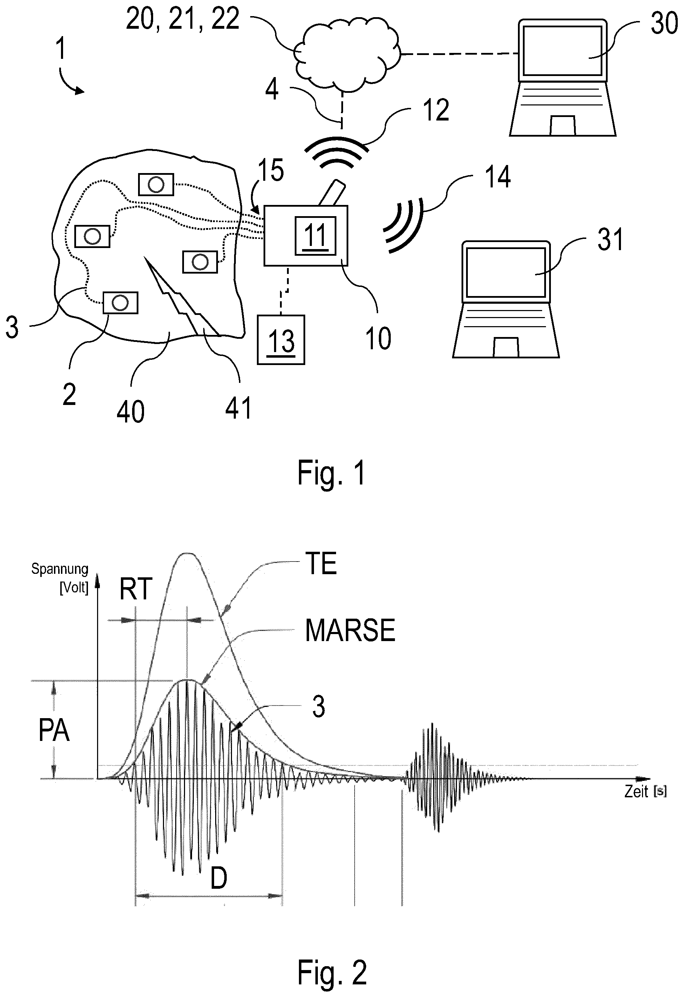

Zunächst wird auf Fig. 1 Bezug genommen, die schematisch eine Ausführungsform des erfindungsgemäßen Systems 1 zur Überwachung des Zustands von in Betrieb befindlichen mechanisch belasteten Objekten 40 zeigt. Das in Fig. 1 dargestellte Prüfobjekt 40 weist beispielhaft einen durch Degradation verursachten Riss 41 auf. Das System 1 weist mehrere an dem zu überwachenden Objekt 40 anordenbare akustische Sensoren 2 auf, die vorzugsweise als piezoelektrische akustische Sensoren ausgebildet sind. Die akustischen Sensoren 2 erfassen am Objekt 40 auftretende Körperschallwellen und setzen empfangene Körperschallwellen in elektrische Schallemissionssignale 3 um. Optional ist ein nicht dargestellter Vorverstärker zur Verstärkung der elektrischen Schallemissionssignale 3 vorgesehen, wobei der Vorverstärker in den akustischen Sensor 2 integriert sein kann. Die akustischen Sensoren 2 sind an ein am oder in der Nähe des Objekts angeordnetes Hauptmodul 10 drahtgebunden oder drahtlos anschließbar. Das Hauptmodul 10 ist dazu ausgebildet, die elektrischen Schallemissionssignale der akustischen Sensoren 2, optional nach Verstärkung durch den Vorverstärker, zu empfangen. Alternativ dazu kann vorgesehen sein, den Vorverstärker in eine Eingangsstufe des Hauptmoduls 10 zu integrieren.

Das Hauptmodul 10 bereitet die empfangenen elektrischen Schallemissionssignale 3 in einem Analogteil für die weitere Verarbeitung auf. Der Analogteil umfasst die Eingangsstufe und einen Analogverstärker, optional gefolgt von einem Differenzverstärker. Die im Analogteil aufbereiteten elektrischen Schallemissionssignale 3, die bis dahin als zeitabhängige Wellenformen vorliegen, werden mittels eines Prozessors 11 in digitale charakteristische Signalparameterwerte 4 umgewandelt. Wenn der Prozessor 11 über keine eingebauten Analog-Digital-Wandler verfügt, sind Analog-Digital-Wandler im Signalpfad zwischen dem Analogteil und dem Prozessor 11 angeordnet. Der Prozessor 11 sendet die digitalen charakteristischen Signalparameterwerte 4 über eine Datenübertragungseinheit 12 an einen entfernten Rechner 20, der als Server konfiguriert ist. Die charakteristischen Signalparameterwerte 4 umfassen vorzugsweise eines oder mehrere aus Signalankunftszeit, Amplitude, Anstiegszeit, Signalenergie, Signaldauer und/oder Zahl der Überschwingungen. Die Signalankunftszeiten der elektrischen Schallemissionssignale 3 werden in einem Zeitstempel festgehalten, der in die Signalparameterwerte 4 integriert ist. Der Prozessor 11 ist vorzugsweise als vollintegriertes "System in Package" ausgebildet, das einen Mikroprozessor, ein EPROM oder EEPROM als Programmspeicher, RAMs als Datenspeicher, zumindest einen Analog-Digital-Wandler, optional einen Digital-AnalogWandler und Datenschnittstellen, wie USB und/oder UART, enthält. Im Prozessor 11 laufen ein Betriebssystem und werden Programme zur Durchführung des erfindungsgemäßen Verfahrens abgearbeitet. Solche vollintegrierten Systeme in einem einzigen Gehäuse, dessen Größe dem eines herkömmlichen Mikroprozessors entspricht, sind auf dem Markt verfügbar und Elektronikentwicklern wohlbekannt. Sie bestechen durch ihren geringen Platz- und Energiebedarf und die hohe Verlässlichkeit aufgrund der Integration der einzelnen Komponenten.

In Fig. 2 ist ein Spannungs-Zeit-Diagramm der elektrischen Schallemissionssignale 3 und der daraus ableitbaren charakteristischen Signalparameterwerte 4 dargestellt. In diesem Diagramm sind die folgenden Signalparameterwerte eines elektrischen Schallemissionssignals 3 dargestellt:
- PA: Spitzenamplitude
- RT: Anstiegszeit
- D: Dauer
- TE: Signalenergie (Fläche unter dem quadrierten Signal)
- MARSE: Gemessene Fläche unter der gleichgerichteten Signaleinhüllenden

Weiters wird den Signalparameterwerten 4 die Zeit des Anfangs des elektrischen Schallemissionssignals 3 hinzugefügt, aus der ersichtlich ist, wann die Körperschallwelle an der Position des Sensors am Objekt eintrifft. Die Zeit kann z.B. als UNIX Zeitstempel (Absolutzeit) eingetragen werden. Als weiterer Signalparameterwert 4 kann die Zahl der Überschwingungen einer Schwelle TAE durch das Schallemissionssignal 3 verwendet werden.

Die Übertragung der charakteristischen Signalparameterwerte 4 vom Hauptmodul 10 an den entfernten Rechner 20 erfolgt über eine Datenübertragungseinheit 12 an eine IP-Adresse des entfernten Rechners 20, wobei die Datenübertragungseinheit 12 zweckmäßig als Funkeinheit, vorzugsweise als Funkeinheit des Mobilfunknetzes ausgebildet ist. Falls das System 1 an Messorten eingesetzt wird, an denen kein Mobilfunknetz verfügbar ist, weist die Datenübertragungseinheit 12 ein WLAN- oder LAN-Modul auf, um die Signalparameterwerte 4 über kabelloses oder kabelgebundenes Internet an den entfernten Rechner 20 zu senden. Ist kein Internet verfügbar, werden die charakteristischen Signalparameterwerte 4 im Hauptmodul 10 in einem internen Speicher abgelegt, der in regelmäßigen Abständen vor Ort ausgelesen wird, wobei die Daten dann manuell an den entfernten Rechner 20 übertragen werden.

Das Hauptmodul 10 weist in diesem Ausführungsbeispiel drahtgebundene oder drahtlose Eingänge 15 auf, die einerseits zum Anschließen der akustischen Sensoren 2 und zusätzlich zum Anschließen von Sensoren zur Erfassung von Temperatur, Druck, Kraft, Dehnung, Beschleunigung, Luftfeuchtigkeit, Regenmenge, Windstärke und Windrichtung dienen. Mithilfe dieser Sensoren können Bewegungen des Objekts 40, darauf einwirkende Kräfte und/oder Wetterparameter erfasst und an den entfernten Rechner 20 übertragen werden.

Das Hauptmodul 10 ist als edge computing device ausgeführt und weist eine geringe Größe und ein geringes Gewicht auf, um einfach am zu überwachenden Objekt 40 befestigt werden zu können. Es ist für einen niedrigen Stromverbrauch ausgelegt und ist mechanisch robust gegenüber äußeren Einflüssen, wie Umweltbedingungen, Stößen und Manipulationsversuchen ausgebildet.

Am Ort des Prüfobjekts 40 befinden sich die akustischen Sensoren 2, optional die Vorverstärker sowie das Hauptmodul 10. Da sich diese Elemente des Systems 1 permanent am Messort befinden und Umweltbedingungen wie Hitze, Kälte, Staub, Feuchtigkeit, Wasser etc. ausgesetzt sind, ist nicht nur das Hauptmodul 10 entsprechend robust ausgebildet, sondern auch die anderen genannten Elemente. Alle genannten Elemente werden mit stabilen, manipulationssicheren Befestigungsmitteln am Objekt 40 oder in der Nähe des Objekts 40 montiert.

Da sich die akustischen Sensoren und das Hauptmodul 10 an Orten befinden können, an denen keine Stromversorgung verfügbar ist, ist vorgesehen, dass das Hauptmodul 10 eine Stromversorgungseinheit 13, vorzugsweise ein Photovoltaikmodul und/oder eine Batterie, aufweist. Die Stromversorgungseinheit 13 kann als separates Modul ausgebildet sein.

Um aus der Ferne feststellen zu können, ob alle akustischen Sensoren 2 funktionsfähig sind, kann zumindest einer der akustischen Sensoren 2 vom Hauptmodul 10 als Aktuator angesprochen werden und einen mechanischen Körperschallimpuls auf das Prüfobjekt 40 übertragen. Durch die Messung der Impulsantwort an den anderen akustischen Sensoren 2 kann deren Funktionsfähigkeit überprüft werden. Das Antwortsignal lässt den Rückschluss auf einen defekten akustischen Sensor 2 zu und löst einen Serviceauftrag aus, um den defekten akustischen Sensor 2 auszutauschen.

Damit die Konfiguration des Hauptmoduls 10 nicht unmittelbar an der Befestigungsstelle am Objekt 40 erfolgen muss, weist das Hauptmodul 10 eine drahtlose Datenübertragungsschnittstelle 14 auf. Mit dieser drahtlosen Datenübertragungsschnittstelle 14 ist das Hauptmodul 10 mit einem in der Nähe befindlichen Konfigurationsgerät 31 verbindbar und kann mittels des Konfigurationsgeräts 31 konfiguriert und gesteuert werden. Das Konfigurationsgerät 31 kann beispielsweise ein Laptop oder ein Tabletcomputer sein. Die drahtlose Datenübertragungsschnittstelle 14 kann in die Datenübertragungseinheit 12 integriert sein.

Das erfindungsgemäße Verfahren ist dafür ausgelegt, an einem Objekt 40 auftretende Schallemissionen zu messen, ohne dass ein zusätzlicher - außerhalb des normalen Betriebs des Objekts 40 liegender - Stimulus, wie z.B. Druck, auf das Objekt 40 aufgebracht wird. Die am Objekt 40 durch das erfindungsgemäße Verfahren gemessenen Schallemissionen können z.B. durch Druck oder Temperatur verursacht sein, die im normalen Betrieb auftreten, wenn das Objekt beispielsweise ein Chemiereaktor ist, und sich in der Bildung oder Vergrößerung von Rissen am Objekt manifestieren. Wenn das Objekt 40 eine Brücke ist, können Schallemissionen am Objekt 40 durch überfahrende Fahrzeuge verursacht werden.

Der entfernte Rechner 20 weist einen Speicher 21 auf und ist dazu ausgebildet, Abfolgen von charakteristischen Signalparameterwerten 4 vom Hauptmodul 10 zu empfangen und im

Speicher 21 zu speichern. Der Speicher 21 kann in einer Datenbank enthalten sein. Am entfernten Rechner 20 wird ein Computerprogramm ausgeführt, das die charakteristischen Signalparameterwerte 4 von mehreren akustischen Sensoren 2 über die Zeit aggregiert und berechnet, ob zumindest einer der aggregierten charakteristischen Signalparameterwerte 4 über die Zeit von vorangegangenen Werten abweicht, bezogen auf eine definierte Periode. Wenn dies der Fall ist, legt das Computerprogramm fest, dass das Objekt 40 eine Degradation aufweist. Optional generiert der entfernte Rechner 20 in diesem Fall eine Meldung, vorzugsweise in Form einer Warninformation an einen Benutzer oder Betreiber des Objekts 40.

Der Prozessor 11 des Hauptmoduls 10 ermittelt Schallereignisse aus den charakteristischen Signalparameterwerten 4, wobei als Schallereignis gilt, wenn zumindest einer der Signalparameterwerte 4 einem bestimmten Kriterium entspricht, z.B. einen Grenzwert überschreitet, und überträgt nur Signalparameterwerte 4 an den entfernten Rechner 20, die ein Schallereignis darstellen. Dadurch bleiben elektrische Schallemissionssignale 3 und die daraus abgeleiteten Signalparameterwerte 4, die die bestimmten Kriterien nicht erfüllen, bei der Berechnung der Degradation unberücksichtigt. Dies führt zu einer weitgehenden Reduzierung der vom Hauptmodul 10 an den entfernten Rechner zu übermittelnden Daten. Zusätzlich verringert sich der Rechenaufwand am entfernten Rechner 20 beträchtlich, ohne dass die Genauigkeit der Berechnung der Degradation merklich leidet. Beispielsweise kann man bei Eisenbahnbrücken als zu überwachende Objekte 40 nur jene Schallereignisse berücksichtigen, deren Schallemissionssignale 3 eine so hohe Signalenergie aufweisen, die nur dann auftritt, wenn über die Brücke ein Fahrzeug mit einer vorgegebenen Mindestmasse fährt. Leichte Fahrzeuge oder andere, z.B. durch Regen, Hagel, etc. verursachte Schallereignisse können vernachlässigt werden, da die schweren Fahrzeuge hauptsächlich für die Degradation der Brücke verantwortlich sind. Allgemein gilt, dass die Schallemissionssignale 3 Nutzsignale, z.B. Signale infolge von Risswachstum, und Störsignale aufgrund von Betriebsgeräuschen oder Umweltgeräuschen enthalten. Mit der vorgeschlagenen Vorgangsweise werden die Störsignale aus der Verarbeitung "ausgefiltert".

Es sind viele Eisenbahnbrücken in Betrieb, die vor Jahrzehnten gebaut wurden. Aufgrund der langen Betriebsdauer und der durch das Überfahren mit Fahrzeugen verursachten dynamischen Belastung können im Lauf der Zeit Risse an der Brücke entstehen. Diese Risse können sich im Lauf der Zeit vergrößern und werden für die Integrität der Struktur kritisch, wenn sie eine bestimmte Größe überschreiten. Die Bildung oder Vergrößerung von Rissen löst Schallereignisse aus, die mit der Masse der überfahrenden Fahrzeuge korrelieren.

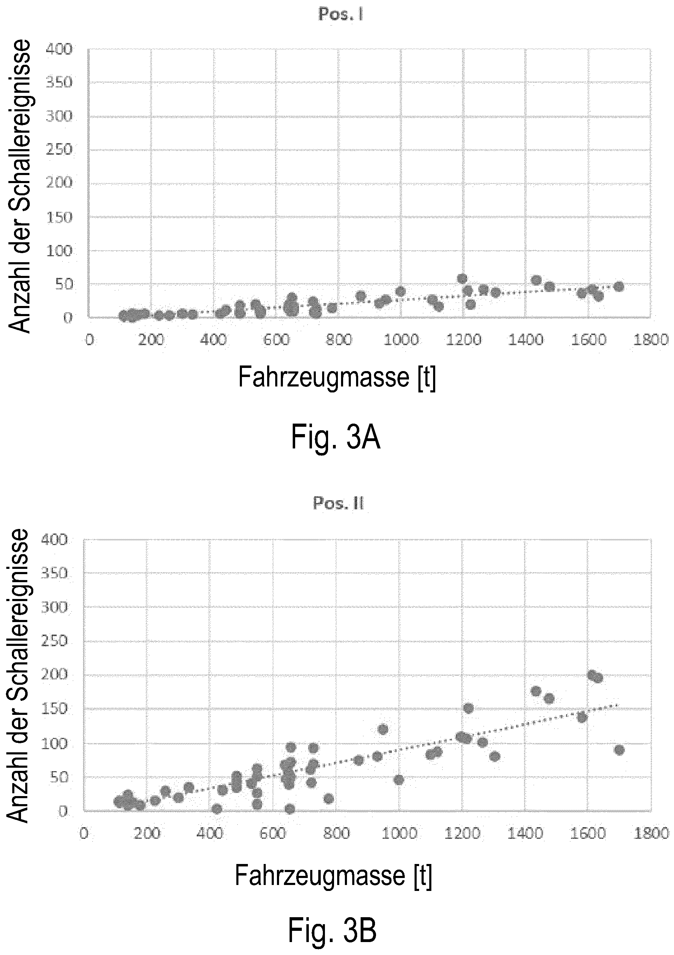

In Fig. 3A ist ein Diagramm der Anzahl von innerhalb eines bestimmten Zeitraums an einer ersten Position einer Brücke aufgetretenen Schallereignissen in Abhängigkeit von der Masse in Tonnen t der die Brücke überfahrenden Fahrzeuge dargestellt. Diese Schallereignisse wurden aus den elektrischen Schallemissionssignalen 3 eines ersten akustischen Sensors 2, der an der ersten Position montiert ist, berechnet. Man erkennt aus diesem Diagramm, dass Fahrzeuge eine umso höhere Anzahl an Schallereignissen verursachen, je schwerer sie sind. Allerdings sind an der ersten Position die Unterschiede der Anzahl an Schallereignissen zwischen leichten und schweren Fahrzeugen gering. Dies ist darauf zurückzuführen, dass die Brücke an der ersten Position eine unversehrte Struktur ohne ausgebildete Risse aufweist.

Zum Vergleich ist in Fig. 3B ein Diagramm der Anzahl von innerhalb eines bestimmten Zeitraums an einer zweiten Position der Brücke aufgetretenen Schallereignissen in Abhängigkeit von der Masse in Tonnen t der die Brücke überfahrenden Fahrzeuge dargestellt. An dieser zweiten Position ist die Struktur der Brücke durch Risse bereits beeinträchtigt. Man erkennt aus dem Diagramm, dass an dieser zweiten Position die Masse der überfahrenden Fahrzeuge eine wesentlich größere Rolle für das Auftreten von Schallereignissen spielt. Dies ist auf das Fortschreiten bzw. Neubilden von Rissen zurückzuführen.

Grundsätzlich entstehen bei lokaler mechanischer Überbelastung des Werkstoffes, aus dem die tragenden Komponenten des Prüfobjektes 40 bestehen, Mikrorisse in der Struktur des Objekts 40, die sich zu größeren Rissen bzw. Risssystemen ausbilden können. Risse wachsen ständig, aber sprungweise. Über die Schallemissionssignale 3 stellt sich das sprungartige Risswachstum als Energiespitze dar, nach dem Wachstumsvorgang sinkt der Verlauf der im Material freiwerdenden Energie wieder auf das Vorniveau. Beim herkömmlichen Schallemissionsverfahren mittels Druckprüfung unter Aufbringung von Zusatzdruck wird beim Auftreten eines solcherart stimulierten Risses von der beim Risswachstum freigesetzten Energie auf den Degradationsgrad des Objekts geschlossen. Im vorliegenden Verfahren setzt das Risswachstum durch die betriebsbedingt auftretenden Stimuli zu unbestimmten Zeitpunkten ein, weshalb die Messungen an den Objekten über einen längeren Zeitraum und unter Aggregation der Signalparameterwerte 4 erfolgen.

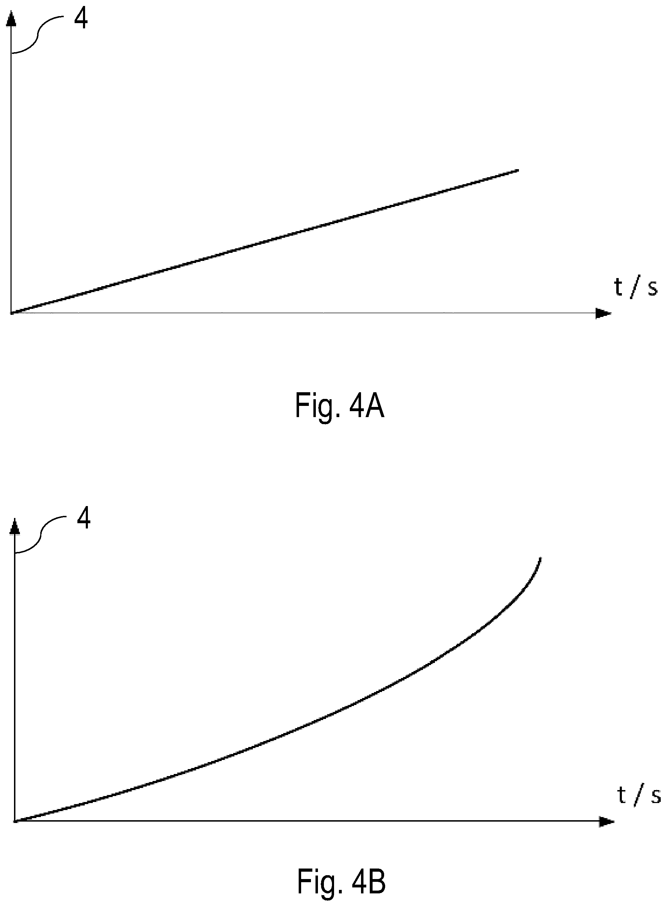

Durch die Aggregation der den Schallereignissen zugeordneten Signalparameterwerten 4, wie z.B. die Signalenergie, steigt der jeweilige aggregierte Signalparameterwert 4 über die Zeit t kontinuierlich an. Solange der Anstieg streng linear verläuft, wie im Diagramm von Fig. 4A gezeigt, deutet dies nicht auf eine Degradation des Objekts hin, sondern beruht nur auf der Aufsummierung der Signalparameterwerte. Sollte jedoch die Steigung des Verlaufs des aggregierten Signalparameterwerts 4 zunehmen, wie in Fig. 4B gezeigt, so deutet dies auf ein Risswachstum am Objekt 40 und eine damit einhergehende Degradation des Objekts 40 hin.

Die laufende Überwachung der Objekte 40 kann am entfernten Rechner 20 durch Software für Benutzer aufbereitet, visualisiert und über eine Schnittstelle 22 und ein Benutzer-Portal 30 den Benutzern, z.B. in Form von Dashboards, zur Verfügung gestellt werden. Beim Überschreiten von im System 1 eingestellten Schwellenwerten können Benutzer bzw. Betreiber des Objekts 40 verständigt werden. Dies kann mittels Warnsignale oder über SMS, E-Mail etc. realisiert werden. Der entfernte Rechner 20 kann in eine Cloud-Umgebung eingebunden sein.

Nach erfolgreicher Installation des Systems 1 erfassen die akustischen Sensoren 2 in einer initialen Überwachung über einen längeren Zeitraum Schallemissionssignale 3. In aller Regel gilt: je länger der Zeitraum der Signalerfassung, desto genauer können Aussagen über das Prüfobjekt getroffen werden. In der praktischen Anwendung dauert die initiale Überwachung mehrere Wochen bis Monate. Die beim initialen Monitoring erfassten sehr großen Zeitseriendaten werden dann hinsichtlich einzeln auftretender Betriebsereignisse oder hinsichtlich konstanter Zeitabschnitte untersucht. Durch Überlagerung der Zeitabschnitte werden die Varianzen bzw. Gradienten in den Zeitseriendaten zueinander ermittelt und verglichen. Basierend auf diesen Varianzen bzw. Gradienten werden dann Schwellenwerte definiert, die die Grenze zwischen akzeptabler und nicht akzeptabler Degradation des Prüfobjekts bestimmen. Diese Schwellenwerte werden im Messystem eingestellt und die eigentliche kontinuierliche Überwachung des Prüfobjekts beginnt und wird über eine unbegrenzte Zeitdauer oder über eine lange Überwachungszeitdauer von zumindest mehreren Tagen, bevorzugt von zumindest einem Monat, durchgeführt. Um auf den zukünftigen Zustand eines überwachten Objekts 40 schließen zu können, wird im entfernten Rechner 20 durch Bestimmen der zeitlichen Varianzabweichung oder Gradientenabweichung im Vergleich zu den initial ermittelten Varianzen oder Gradienten berechnet, ob zumindest einer der aggregierten charakteristischen Signalparameterwerte 4 über die Zeit von früheren aggregierten charakteristischen Signalparameterwerten abweicht.

Im speziellen Fall der Überwachung von hochbelasteten oder rissanfälligen Bereichen von Brücken ermittelt das im entfernten Rechner 20 laufende Computerprogramm in einer Ausführungsform anhand der empfangenen Signalparameterwerte 4 die Zeitpunkte und die Dauer von Fahrzeugüberfahrten und schätzt die individuelle Fahrzeugmasse, wobei das Programm für die Fahrzeugdetektion und Schätzung der Fahrzeugmasse zunächst anhand voraufgezeichneter akustischer Emissions-Referenzdaten und eines Protokolls der vorangegangenen Fahrzeugüberfahrten auf verschiedenen Brücken trainiert und feinabgestimmt wird. Die Signalparameterwerte 4 der schwersten Fahrzeuge eines jeden Tages werden zusammengefasst und einer im Computerprogramm realisierten Failure Forecast Method (FFM) eingegeben, die als Ergebnis eine Umkehr-Rate eines Degradationsprozesses des Objekts 40 liefert, aus der die Entwicklung selbstbeschleunigender Degradationsprozesse abschätzbar und der Zeitpunkt des Versagens der Brücke vorhersagbar sind. Daraus lässt sich beispielsweise ein "Ampelsystem" definieren, das aussagt, ob sich der beobachtete verdächtige Bereich für Überfahrten noch in einem sicheren Zustand befindet (grün), in einem Übergangsbereich liegt (gelb) oder die Degradation so weit fortgeschritten ist, dass eine Überfahrt nicht mehr vertretbar ist (rot).

Das erfindungsgemäße System 1 und das darauf ablaufende Verfahren ermöglichen eine kontinuierliche, automatische 24/7-Überwachung der strukturellen Gesundheit eines Objekts 40.

## Patentansprüche

1. Verfahren zur Überwachung des Zustands von in Betrieb befindlichen mechanisch belasteten Objekten (40), umfassend:
Erkennen von Körperschallwellen über akustische Sensoren (2), vorzugsweise piezoelektrische akustische Sensoren, die an dem Objekt (40) angeordnet sind,
Umsetzen der Körperschallwellen in elektrische Schallemissionssignale (3), wobei die elektrischen Schallemissionssignale (3) optional verstärkt werden,
Übermitteln der elektrischen Schallemissionssignale (3) an ein am oder in der Nähe des Objekts angeordnetes Hauptmodul (10), das einen Prozessor (11) aufweist,
Umwandeln der elektrischen Schallemissionssignale (3) in charakteristische Signalparameterwerte (4), die vorzugsweise eines oder mehrere aus Signalankunftszeit, Amplitude, Anstiegszeit, Signalenergie, Signaldauer und/oder Zahl der Überschwingungen umfassen, durch den Prozessor (11),
Übermitteln der Signalparameterwerte (4) an einen entfernten Rechner (20) und Speichern der Signalparameterwerte in einem mit dem entfernten Rechner (20) kommunizierenden Speicher (21),
Erkennen von Schallereignissen aus den charakteristischen Signalparameterwerten (4), vorzugsweise aus in den charakteristischen Signalparameterwerten (4) enthaltenen Signalankunftszeiten, von mehreren der akustischen Sensoren (2), die am Objekt (40) an unterschiedlichen Positionen angeordnet sind,
Aggregieren der charakteristischen Signalparameterwerte (4) der Schallereignisse durch den entfernten Rechner (20) über die Zeit,
Berechnen durch den entfernten Rechner (20), ob zumindest einer der aggregierten charakteristischen Signalparameterwerte (4) über die Zeit von vorangegangenen aggregierten charakteristischen Signalparameterwerten (4) abweicht und wenn dies der Fall ist, Festlegen,
dass das Objekt (40) eine Degradation aufweist und optional Generieren einer Meldung, vorzugsweise einer Warninformation, an einen Benutzer des Objekts (40).

2. Verfahren nach Anspruch 1, **dadurch gekennzeichnet, dass** der entfernte Rechner (20) eine Degradation festlegt, wenn die Abweichung der aggregierten charakteristischen Signalparameterwerte von vorangegangenen aggregierten charakteristischen Signalparameterwerten einen vorbestimmten Schwellenwert überschreitet.

3. Verfahren nach Anspruch 2, **dadurch gekennzeichnet, dass** der Schwellenwert bestimmt wird durch
initiales Ermitteln von im Betrieb und in Reaktion auf einwirkende Stimuli auftretenden Schallereignissen in einer Abfolge von Signalparameterwerten,
Unterteilen der Abfolge von Signalparameterwerten in konstante Zeitabschnitte oder in Zeitabschnitte mit der Zeitdauer der auf das Prüfobjekt einwirkenden Stimuli aufgrund der Betriebsbelastung,
Ermitteln von Varianzen oder Gradienten in der Abfolge von Schallereignissen mit charakteristischen Signalparameterwerten zueinander durch Überlagern der Zeitabschnitte, und
Festlegen des Schwellenwerts auf Basis eines Vergleichs der ermittelten Varianzen oder Gradienten.

4. Verfahren nach Anspruch 3, **dadurch gekennzeichnet, dass** das Berechnen durch den entfernten Rechner, ob zumindest einer der aggregierten charakteristischen Signalparameterwerte über die Zeit von früheren aggregierten charakteristischen Signalparameterwerten abweicht, durch Bestimmen der zeitlichen Varianzabweichung oder Gradientenabweichung im Vergleich zu den initial ermittelten Varianzen oder Gradienten erfolgt.

5. Verfahren nach einem der vorhergehenden Ansprüche, **dadurch gekennzeichnet, dass** das Verfahren über eine unbegrenzte Zeitdauer oder über eine lange Überwachungszeitdauer von zumindest mehreren Tagen, bevorzugt von zumindest einem Monat, durchgeführt wird.

6. Verfahren nach einem der vorhergehenden Ansprüche, **dadurch gekennzeichnet, dass** es zur Überwachung des Zustands von Eisenbahnbrücken oder Straßenbrücken konfiguriert ist, wobei diese Brücken vorzugsweise Stahlbrücken oder Stahlbetonbrücken sind, wobei der entfernte Rechner die Signalparameterwerte mit den Zeitpunkten und optional der Dauer des Überfahrens von individuellen Fahrzeugen über die Brücke verknüpft.

7. Verfahren nach Anspruch 6, **dadurch gekennzeichnet, dass** der entfernte Rechner die Masse der die Brücke überfahrenden Fahrzeuge anhand der Signalparameterwerte durch Vergleich mit Referenz-Signalparameterwerten von Fahrzeugen mit bekannter Masse schätzt und für die Berechnung der Degradation des Objekts nur Signalparameterwerte heranzieht, die mit Fahrzeugen verknüpft sind, die eine vorbestimmte Mindestmasse aufweisen.

8. Überwachungssystem (1) zur Durchführung des Verfahrens nach einem der vorhergehenden Ansprüche, **gekennzeichnet durch**
an einem zu überwachenden Objekt (40) anordenbare akustische Sensoren (2), vorzugsweise piezoelektrische akustische Sensoren, zur Erkennung von Körperschallwellen, wobei die akustischen Sensoren (2) dazu ausgebildet sind, empfangene Körperschallwellen in elektrische Schallemissionssignale (3) umzusetzen,
optional Vorverstärker zur Verstärkung der elektrischen Schallemissionssignale, wobei die Vorverstärker in die akustischen Sensoren (2) integriert sein können,
ein am oder in der Nähe des Objekts anordenbares Hauptmodul (10), das einen Prozessor (11) aufweist, wobei das Hauptmodul dazu ausgebildet ist, die elektrischen Schallemissionssignale von den akustischen Sensoren (2) oder optional vom Vorverstärker zu empfangen,
wobei das Hauptmodul (10) dazu ausgebildet ist, durch den Prozessor (11) die empfangenen elektrischen Schallemissionssignale (3) in charakteristische Signalparameterwerte (4), die vorzugsweise eines oder mehrere aus Signalankunftszeit, Amplitude, Anstiegszeit, Signalenergie, Signaldauer und/oder Zahl der Überschwingungen umfassen, umzuwandeln und an einen entfernten Rechner (20) zu senden,
einen entfernten Rechner (20) mit einem Speicher (21), wobei der entfernte Rechner (20) dazu ausgebildet ist, Abfolgen von charakteristischen Signalparameterwerten (4) vom Hauptmodul (10) zu empfangen und im Speicher (21) zu speichern,
wobei der entfernte Rechner (20) dazu ausgebildet ist, die charakteristischen Signalparameterwerte (4) über die Zeit zu aggregieren und zu berechnen, ob zumindest einer der aggregierten charakteristischen Signalparameterwerte (4) über die Zeit von vorangegangenen aggregierten charakteristischen Signalparameterwerten (4) abweicht und wenn dies der Fall ist, festzulegen, dass das Objekt eine Degradation aufweist, und optional eine Meldung zu generieren, vorzugsweise in Form einer Warninformation an einen Benutzer des Objekts.

9. Überwachungssystem nach Anspruch 8, **dadurch gekennzeichnet, dass** das Hauptmodul (10) als unabhängiges Computermodul, vorzugsweise als Edge Computing Device, ausgebildet ist.

10. Überwachungssystem nach Anspruch 8 oder 9, **dadurch gekennzeichnet, dass** das Hauptmodul (10) Eingänge (15) zum drahtgebundenen oder drahtlosen Verbinden mit den akustischen Sensoren (2) und optional mit zusätzlichen Sensoren zur Erfassung von Temperatur, Druck, Kraft, Dehnung, Beschleunigung, Luftfeuchtigkeit, Regenmenge, Windstärke und Windrichtung aufweist.

11. Überwachungssystem nach einem der Ansprüche 8 bis 10, **dadurch gekennzeichnet, dass** das Hauptmodul (10) dazu ausgebildet ist, einen oder mehrere der akustischen Sensoren (2) als Aktuator anzusprechen und damit einen Körperschallimpuls auf das Objekt (40) zu übertragen, der von einem anderen der verbundenen akustischen Sensoren (2) empfangen wird.

12. Überwachungssystem nach einem der Ansprüche 8 bis 11, **dadurch gekennzeichnet, dass** das Hauptmodul (4) eine Stromversorgungseinheit (13), vorzugsweise ein Photovoltaikmodul und/oder eine Batterie, aufweist.

13. Überwachungssystem nach einem der Ansprüche 8 bis 12, **dadurch gekennzeichnet, dass** das Hauptmodul (10) zumindest eine drahtlose oder drahtgebundene Datenübertragungseinheit (12) aufweist, um die Signalparameterwerte (4) an den entfernten Rechner (20) zu übertragen.

14. Überwachungssystem nach einem der Ansprüche 8 bis 13, **dadurch gekennzeichnet, dass** der entfernte Rechner (20) eine Schnittstelle (22) zum Zugriff der gespeicherten oder von dem entfernten Rechner (20) analysierten Signalparameterwerte (4) durch ein Benutzer-Portal (30) aufweist.

15. Überwachungssystem nach einem der Ansprüche 8 bis 14, **dadurch gekennzeichnet, dass** das Hauptmodul (10) zumindest eine drahtlose Datenübertragungsschnittstelle (14) aufweist, um das Hauptmodul (10) mit einem in der Nähe befindlichen Konfigurationsgerät (31) zu verbinden und mittels des Konfigurationsgeräts (31) zu konfigurieren und zu steuern.

## Claims

1. Method for monitoring the condition of mechanically loaded objects (40) in operation, comprising:
detecting structure-borne sound waves via acoustic sensors (2), preferably piezoelectric acoustic sensors, arranged on the object (40),
converting the structure-borne sound waves into electrical acoustic emission signals (3), wherein the electrical acoustic emission signals (3) are optionally amplified,
transmitting the electrical acoustic emission signals (3) to a main module (10) arranged on or near the object, which comprises a processor (11),
converting the electrical acoustic emission signals (3) into characteristic signal parameter values (4), which preferably comprise one or more of signal arrival time, amplitude, rise time, signal energy, signal duration, and/or number of overshoots, by the processor (11),
transmitting the signal parameter values (4) to a remote computer (20) and storing the signal parameter values in a memory (21) that communicates with the remote computer (20),
detecting acoustic events from the characteristic signal parameter values (4), preferably from signal arrival times contained in the characteristic signal parameter values (4), from a plurality of the acoustic sensors (2) arranged at different positions on the object (40),
aggregating the characteristic signal parameter values (4) of the acoustic events by the remote computer (20) over time,
calculating by the remote computer (20) whether at least one of the aggregated characteristic signal parameter values (4) over time deviates from previous aggregated characteristic signal parameter values (4) and, if this is the case, determining that the object (40) exhibits degradation and optionally generating a message, preferably a warning information, to a user of the object (40).

2. Method according to claim 1, **characterized in that** the remote computer (20) determines a degradation if the deviation of the aggregated characteristic signal parameter values from previous aggregated characteristic signal parameter values exceeds a predetermined threshold value.

3. Method according to claim 2, **characterized in that** the threshold value is determined by
initially detecting sound events occurring during operation and in response to applied stimuli in a sequence of signal parameter values,
dividing the sequence of signal parameter values into constant time intervals or into time intervals corresponding to the duration of the stimuli acting on the test object due to the operational load,
determining variances or gradients in the sequence of sound events with characteristic signal parameter values relative to one another by superimposing the time intervals, and determining the threshold value based on a comparison of the determined variances or gradients.

4. Method according to claim 3, **characterized in that** the remote computer calculates whether at least one of the aggregated characteristic signal parameter values deviates over time from previous aggregated characteristic signal parameter values by determining the temporal variance deviation or gradient deviation in comparison to the initially determined variances or gradients.

5. Method according to any of the preceding claims, **characterized in that** the method is performed over an unlimited period of time or over a long monitoring period of at least several days, preferably of at least one month.

6. Method according to any of the preceding claims, **characterized in that** it is configured to monitor the condition of railway bridges or road bridges, wherein these bridges are preferably steel bridges or reinforced concrete bridges, wherein the remote computer links the signal parameter values to the times and, optionally, the duration of individual vehicles crossing the bridge.

7. Method according to claim 6, **characterized in that** the remote computer estimates the mass of the vehicles crossing the bridge based on the signal parameter values by comparison with reference signal parameter values of vehicles of known mass, and uses only signal parameter values associated with vehicles having a predetermined minimum mass for calculating the degradation of the structure.

8. Monitoring system (1) for carrying out the method according to one of the preceding claims, **characterized by**
acoustic sensors (2), preferably piezoelectric acoustic sensors, which can be arranged on an object (40) to be monitored for the detection of structure-borne sound waves, wherein the acoustic sensors (2) are designed to convert received structure-borne sound waves into electrical acoustic emission signals (3),
optional preamplifiers for amplifying the electrical acoustic emission signals, wherein the preamplifiers may be integrated into the acoustic sensors (2),
a main module (10) that can be positioned on or near the object and comprises a processor (11), wherein the main module is configured to receive the electrical acoustic emission signals from the acoustic sensors (2) or, optionally, from the preamplifier,
wherein the main module (10) is configured to convert, via the processor (11), the received electrical acoustic emission signals (3) into characteristic signal parameter values (4), which preferably comprise one or more of signal arrival time, amplitude, rise time, signal energy, signal duration, and/or number of overshoots, and to transmit them to a remote computer (20),
a remote computer (20) with a memory (21), wherein the remote computer (20) is configured to receive sequences of characteristic signal parameter values (4) from the main module (10) and to store them in the memory (21),
wherein the remote computer (20) is configured to aggregate the characteristic signal parameter values (4) over time and to determine whether at least one of the aggregated characteristic signal parameter values (4) over time deviates from previous aggregated characteristic signal parameter values (4) and, if this is the case, to determine that the object exhibits degradation, and optionally to generate a message, preferably in the form of a warning information, to a user of the object.

9. Monitoring system according to claim 8, **characterized in that** the main module (10) is configured as an independent computer module, preferably as an edge computing device.

10. Monitoring system according to claim 8 or 9, **characterized in that** the main module (10) has inputs (15) for wired or wireless connection to the acoustic sensors (2) and, optionally, to additional sensors for detecting temperature, pressure, force, strain, acceleration, humidity, rainfall, wind speed, and wind direction.

11. Monitoring system according to any one of claims 8 to 10, **characterized in that** the main module (10) is configured to actuate one or more of the acoustic sensors (2) as an actuator and thereby transmit a structure-borne sound pulse to the object (40), which is received by another of the connected acoustic sensors (2).

12. Monitoring system according to any one of claims 8 to 11, **characterized in that** the main module (4) comprises a power supply unit (13), preferably a photovoltaic module and/or a battery.

13. Monitoring system according to any one of claims 8 to 12, **characterized in that** the main module (10) comprises at least one wireless or wired data transmission unit (12) for transmitting the signal parameter values (4) to the remote computer (20).

14. Monitoring system according to any one of claims 8 to 13, **characterized in that** the remote computer (20) comprises an interface (22) for accessing the signal parameter values (4) stored or analyzed by the remote computer (20) via a user portal (30).

15. Monitoring system according to any one of claims 8 to 14, **characterized in that** the main module (10) comprises at least one wireless data transmission interface (14) for connecting the main module (10) to a nearby configuration device (31) and for configuring and controlling it via the configuration device (31).

## Revendications

1. Procédé de surveillance de l'état des objets (40) soumis à des contraintes mécaniques en fonctionnement, comprenant:
détecter des ondes sonores structurelles par des capteurs acoustiques (2), de préférence par des capteurs acoustiques piézoélectriques, disposés sur l'objet (40),
transformer les ondes sonores structurelles en signaux d'émission sonore électrique (3), les signaux d'émission sonore électrique (3) étant éventuellement amplifiés,
transmettre les signaux d'émission sonore électrique (3) à un module principal (10) disposé sur ou à proximité de l'objet et comprenant un processeur (11),
convertir les signaux d'émission sonore électrique (3) en valeurs caractéristiques des paramètres du signal (4), comprenant de preference un ou plusieurs des éléments suivants: le temps d'arrivée du signal, l'amplitude, le temps de montée, l'énergie du signal, la durée du signal et/ou le nombre de dépassements, par le processeur (11),
transmettre les valeurs des paramètres du signal (4) à un ordinateur distant (20) et stocker les valeurs des paramètres du signal dans une mémoire (21) communiquant avec l'ordinateur distant (20),
détecter des événements sonores à partir des valeurs caractéristiques des paramètres du signal (4), de préférence à partir des temps d'arrivée du signal contenus dans les valeurs caractéristiques des paramètres du signal (4), de plusieurs capteurs acoustiques (2) disposés à différentes positions sur l'objet (40),
agréger les valeurs caractéristiques des paramètres du signal (4) des événements sonores par l'ordinateur distant (20) au fil du temps,
calculer par l'ordinateur distant (20) si au moins une des valeurs caractéristiques agrégées des paramètres du signal (4) s'écarte des valeurs caractéristiques agrégées précédentes des paramètres du signal (4) au fil du temps et, si tel est le cas, déterminer que l'objet (40) présente une dégradation et, éventuellement, générer un message, de préférence des informations d'avertissement, à l'utilisateur de l'objet (40).

2. Procédé selon la revendication 1, **caractérisé en ce que** l'ordinateur distant (20) détermine une dégradation lorsque l'écart des valeurs caractéristiques agrégées des paramètres du signal par rapport aux valeurs caractéristiques agrégées précédentes des paramètres du signal dépasse un seuil prédéterminé.

3. Procédé selon la revendication 2, **caractérisé en ce que** le seuil est déterminé par:
identifier initialement des événements sonores survenant en fonctionnement et en réponse aux stimuli appliqués, dans une séquence des valeurs des paramètres du signal,
diviser la séquence des valeurs des paramètres du signal en intervalles de temps constants ou en intervalles de temps avec la durée des stimuli appliqués à l'objet testé en raison de la charge opérationnelle;
identifier des variances ou des gradients dans la séquence des événements sonores avec des valeurs caractéristiques des paramètres du signal, les uns par rapport aux autres, en superposant les intervalles de temps, et
déterminer le seuil sur la base d'une comparaison des variances ou des gradients ainsi déterminés.

4. Procédé selon la revendication 3, **caractérisé en ce que** le calcul, par l'ordinateur distant, si au moins une des valeurs caractéristiques agrégées des paramètres du signal s'écarte des valeurs caractéristiques agrégées précédentes des paramètres du signal au fil du temps est effectué en déterminant l'écart de variance temporelle ou l'écart de gradient par rapport aux variances ou gradients initialement déterminés.

5. Procédé selon l'une quelconque des revendications précédentes, **caractérisé en ce que** le procédé est mis en œuvre pendant une durée illimitée ou pendant une longue période de surveillance d'au moins plusieurs jours, de préférence d'au moins un mois.

6. Procédé selon l'une quelconque des revendications précédentes, **caractérisé en ce qu'**il est configuré pour surveiller l'état des ponts de chemin de fer ou des ponts routiers, ces ponts étant, de preference, des ponts en acier ou des ponts en béton armé, dans lequel l'ordinateur distant associe les valeurs des paramètres du signal aux points temporels et, éventuellement, à la durée de passage des véhicules individuels traversant le pont.

7. Procédé selon la revendication 6, **caractérisé en ce que** l'ordinateur distant estime la masse des véhicules traversant le pont à partir des valeurs des paramètres du signal, par comparaison avec des valeurs de référence des paramètres du signal des véhicules de masse connue, et n'utilise que les valeurs des paramètres du signal associées aux véhicules ayant une masse minimale prédéterminée pour calculer la dégradation de l'objet.

8. Système de surveillance (1) pour la mise en œuvre du procédé selon l'une des revendications précédentes, **caractérisé par**:
des capteurs acoustiques (2), de préférence des capteurs acoustiques piézoélectriques, pouvant être disposés sur un objet (40) à surveiller, pour détecter des ondes sonores structurelles, les capteurs acoustiques (2) étant conçus pour transformer les ondes sonores structurelles reçues en signaux d'émission sonore électrique (3),
éventuellement des pré-amplificateurs pour amplifier les signaux d'émission sonore électrique, les pré-amplificateurs pouvant être intégrés aux capteurs acoustiques (2),
un module principal (10) pouvant être disposé sur ou à proximité de l'objet et comprenant un processeur (11), le module principal étant conçu pour recevoir les signaux d'émission sonore électrique des capteurs acoustiques (2) ou, éventuellement, du préamplificateur,
le module principal (10) étant conçu pour convertir les signaux d'émission sonore électrique (3) reçus en valeurs caractéristiques des paramètres du signal (4), comprenant de preference un ou plusieurs des éléments suivants: le temps d'arrivée du signal, l'amplitude, le temps de montée, l'énergie du signal, la durée du signal et/ou le nombre de dépassements, par le processeur (11), et les envoyer à un ordinateur distant (20),
un ordinateur distant (20) avec une mémoire (21), l'ordinateur distant (20) étant conçu pour recevoir des séquences des valeurs caractéristiques des paramètres du signal (4) provenant du module principal (10) et les stocker dans la mémoire (21),
l'ordinateur distant (20) étant conçu pour agréger les valeurs caractéristiques des paramètres du signal (4) au fil du temps et pour calculer si au moins une des valeurs caractéristiques agrégées des paramètres du signal (4) s'écarte des valeurs caractéristiques agrégées précédentes des paramètres du signal (4) au fil du temps et, si tel est le cas, pour déterminer que l'objet présente une dégradation et, éventuellement, pour générer un message, de préférence sous forme des informations d'avertissement, à l'utilisateur de l'objet.

9. Système de surveillance selon la revendication 8, **caractérisé en ce que** le module principal (10) est conçu comme un module informatique indépendant, de préférence comme un dispositif de calcul en périphérie.

10. Système de surveillance selon la revendication 8 ou 9, **caractérisé en ce que** le module principal (10) présente des entrées (15) pour une connexion filaire ou sans fil aux capteurs acoustiques (2) et optionnellement comprenant des capteurs supplémentaires pour la détection de la température, de la pression, de la force, de l'allongement, de l'accélération, de l'humidité de l'air, de la quantité de pluie, de la vitesse du vent et de la direction du vent.

11. Système de surveillance selon l'une quelconque des revendications 8 à 10, **caractérisé en ce que** le module principal (10) est conçu pour répondre à un ou plusieurs des capteurs acoustiques (2) comme des actionneurs et ainsi transmettre une impulsion sonore transmise par la structure à l'objet (40), laquelle est reçue par un autre des capteurs acoustiques (2) connectés.

12. Système de surveillance selon l'une quelconque des revendications 8 à 11, **caractérisé en ce que** le module principal (4) comprend une unité d'alimentation électrique (13), de préférence un module photovoltaïque et/ou une batterie.

13. Système de surveillance selon l'une quelconque des revendications 8 à 12, **caractérisé en ce que** le module principal (10) comprend au moins une unité de transmission de données sans fil ou filaire (12) pour transmettre les valeurs des paramètres du signal (4) à l'ordinateur distant (20).

14. Système de surveillance selon l'une quelconque des revendications 8 à 13, **caractérisé en ce que** l'ordinateur distant (20) présente une interface (22) pour accéder aux valeurs des paramètres du signal (4) stockées ou analysées par l'ordinateur distant (20) via un portail utilisateur (30).

15. Système de surveillance selon l'une quelconque des revendications 8 à 14, **caractérisé en ce que** le module principal (10) présente au moins une interface de transmission de données sans fil (14) permettant de connecter le module principal (10) à un dispositif de configuration (31) situé à proximité et de le configurer et de le contrôler au moyen du dispositif de configuration (31).
